# EUROPEAN PATENT SPECIFICATION

(11) **EP 1 553 746 B1**
(45) Date of publication and mention of the grant of the patent: **29.08.2007**
(21) Application number: 05000086.8
(22) Date of filing: 04.01.2005
(51) Int. Cl.: H04L 29/06, H04L 12/24

(54) **Configuring network settings of thin client devices using portable storage media**
Konfiguration von Netzwerkparametern von Klients mit beschränkter Funktionalität mittels eines tragbaren Datenträgers
Configuration de paramètres réseau d'un client à fonctionalités réduites utilisant un support de données portable

(30) Priority: 07.01.2004 US 534795 P; 23.03.2004 US 807095
(43) Date of publication of application: 13.07.2005
(73) Proprietor: Microsoft Corporation, Redmond WA 98052 (US)
(72) Inventor: Nick, Benjamin c/o Microsoft Corporation, Redmond WA 98052 (US); Abraham, Dalen c/o Microsoft Corporation, Redmond WA 98052 (US); Manchester, Scott c/o Microsoft Corporation, Redmond, WA 98052 (US); Freeman, Trevor W. c/o Microsoft Corporation, Redmond WA 98052 (US)
(74) Representative: Grünecker, Kinkeldey, Stockmair & Schwanhäusser Anwaltssozietät

(56) References cited:
- WO-A-03/092222
- US-A1- 2002 007 407
- US-A1- 2002 009 199
- US-A1- 2003 154 287

## Description

This invention pertains generally to the field of computer networks and more particularly to a mechanism for simplifying the process of configuring nodes in computer networks.

The use of data communication networks continues to grow. In small as well as large corporate settings, wired local area networks (LANs) and wide area networks (WANs) have become an established feature of conducting business, and wireless networks are being increasingly employed. The use of network technology in the home, both wired and wireless, is a more recent phenomenon and has been slower to develop. In addition to facilitating Internet connectivity, home networking permits personal computing devices and various consumer electronic devices and appliances within the home to communicate with each other. Wireless technology, such as IEEE 802.11 wireless networks and networks of Bluetooth-enabled devices, is attractive in home as well as corporate environments for reasons of convenience, mobility and flexibility.

A principal impediment to the wider adoption of wireless networking technology in the home and other non-corporate environments has been the difficulty experienced by non-expert users in configuring network devices. Configuring network devices often requires detailed knowledge of the hardware, software, and protocols of the network, and can be too complicated for an average user. Moreover, many network devices nowadays are "thin-client" devices that typically run a reduced version of an operating system and do not have support for the user interface components (e.g., a monitor, keyboard, and/or mouse) and functions of conventional personal computers. The lack of convenient and intuitive I/O capabilities often makes it difficult to configure a thin client device for a home network. For example, it can be troublesome for many users to configure a wireless access point (WAP), which is typically a thin client device. It can be particularly laborious and difficult to modify the network settings of a thin client device to configure it for a wireless network, when the thin client device does not have a ready connection with a regular computer. With the advancements of wireless networking technologies, various types of thin client devices, such as digital audio receivers, wireless printers, set top boxes, etc., are added to home networks, and there is a need for a simple and easy way to configure such thin client devices for network connectivity.

WO 03/092222 A describes a system and method which enable an easy communication setting between different apparatuses. A first terminal apparatus is described which has an established communication with an access point. A user puts a tag such as an IC card close to an IC tag reader/writer of the first terminal apparatus, which performs contactless communication with the tag at close ranges to transmit communication setting information to the tag. The tag stores the received communication setting information. Then, the user puts the tag close to an IC tag reader/writer of the second terminal apparatus, which receives the communication setting information from the tag. The second terminal apparatus stores the received communication setting information, and performs communication setting for connecting to the first terminal apparatus via the access point based on the stored communication setting information.

US 2003/154287 A1 suggests a method of integrating setting up a residential gateway or access point and setting up a client network adapter into a single software process. In particular, a residential setup wizard is described which runs on a client PC and which can automatically detect whether a thin residential gateway is present which has not yet been configured. This thin residential gateway may then be configured by the residential gateway setup wizard.

It is the object of the present invention to enable an improved configuring of a thin client computing device for operation in a network.

The object is solved by the subject matter of the independent claims.

Preferred embodiments of the present invention are defined by the dependent claims.

In accordance with the invention, the task of configuring a thin client device for networking functionality and connectivity is made particularly simple and easy by using a portable computer-readable media device, such as a USB flash drive or an SD memory card, to transfer and automatically load network settings into the thin client device. A configuration application on a personal computer aids the user in generating configuration data that include proper network settings for a wide-area network (WAN), local-area network (LAN), or wireless network, depending on the intended purposes and network functions of the thin-client device. The configuration data may also include device configuration information, security information, and file sharing information. The configuration application then generates an Extensible Markup Language (XML) file embodying the configuration data, and writes that XML file into the portable media device. A user may then install the portable media device in a thin client computing devices to transfer the configuration data to the device. The thin client device detects the connection of the portal media device and automatically loads the configuration data, and provides signals to indicate completion of the configuration operation. As a result, a thin client device may be provisioned with the network settings and other configuration data quickly and conveniently without the need for a full-fledged user interface for interacting with the user.

Additional features and advantages of the invention will be apparent from the following detailed description of illustrative embodiments which proceeds with reference to the accompanying figures.

### BRIEF DESCRIPTION OF THE DRAWINGS

While the appended claims set forth the features of the present invention with particularity, the invention and its advantages are best understood from the following detailed description taken in conjunction with the accompanying drawings, of which:

Figure 1 is a schematic diagram illustrating an exemplary architecture of a computing device that may be used for carrying out a process of configuring a thin client computing device in accordance with an embodiment of the invention;

FIG. 2 is a schematic diagram illustrating an exemplary home network that has network connectivity for wide-area, local-area, and wireless networks and includes a plurality of thin client devices that may be configured in accordance with an embodiment of the invention;

FIG. 3 is a schematic diagram illustrating the use of a portable media device for transferring configuration data including network settings to a thin client computing device;

FIG. 4A-F are schematic diagrams illustrating user interface screenshots of a configuration application for generating configuration data for a thin client computing device and storing the configuration data on a portable media device for transfer to the thin client device;

FIG. 5 is a schematic diagrams illustrating a software architecture for generating network setting data for configuring network devices in accordance with an embodiment of the invention;

FIG. 6 is a flow diagram illustrating a method for configuring a thin client computing device using a portable media device in accordance with an embodiment of the invention;

FIG. 7 is a process diagram illustrating a method for configuring a thin client device for joining an ad hoc wireless network in accordance with an embodiment of the invention;

FIG. 8 is a process diagram illustrating a method for configuring a wireless access point in accordance with an embodiment of the invention;

FIG. 9 is a data structure diagram illustrating fields of an XML schema for representing wireless network configuration settings in accordance with an embodiment of the invention;

FIGS. 10A-C are data structure diagrams illustrating fields of an XML schema for representing WAN configuration settings in accordance with an embodiment of the invention; and

FIG. 11 is a data structure diagram illustrating fields of an XML schema for representing LAN configuration settings in accordance with an embodiment of the invention.

### DETAILED DESCRIPTION OF THE INVENTION

Methods and systems for configuring network devices with a portable media device will now be described with respect to certain embodiments. The skilled artisan will readily appreciate that the methods and systems described herein are merely exemplary and that variations can be made without departing from the scope of the invention.

The present invention will be more completely understood through the following detailed description, which should be read in conjunction with the attached drawings. In this description, like numbers refer to similar elements within various embodiments of the present invention. The invention is illustrated as being implemented in a suitable computing environment. Although not required, the invention will be described in the general context of computer-executable instructions, such as procedures, being executed by a personal computer. Generally, procedures include program modules, routines, functions, programs, objects, components, data structures, etc. that perform particular tasks or implement particular abstract data types. Moreover, those skilled in the art will appreciate that the invention may be practiced with other computer system configurations, including hand-held devices, multiprocessor systems, and microprocessor-based or programmable consumer electronics devices. The invention may also be practiced in distributed computing environments where tasks are performed by remote processing devices that are linked through a communications network. In a distributed computing environment, program modules may be located in both local and remote memory storage devices. The term computer system may be used to refer to a system of computers such as may be found in a distributed computing environment.

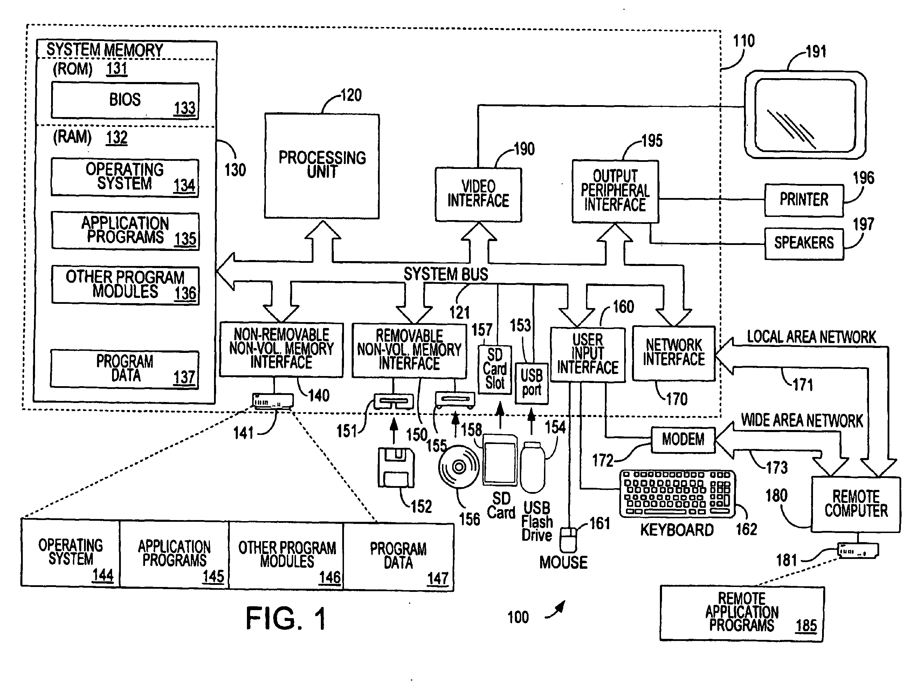

Figure 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100. Although at least one embodiment of the invention does include each component illustrated in the exemplary operating environment 100, another more typical embodiment of the invention excludes some or all non-essential components, for example, input/output devices other than those required for network communications.

With reference to Figure 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures.

The computer 110 typically includes a variety of computer-readable media. Computer-readable media can be any available media that can be accessed by the computer 110 and includes both volatile and nonvolatile media, and removable and non-removable media. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, optical disk storage, magnetic cassettes, magnetic tape, magnetic disk storage or other magnetic storage devices, or any other medium which can be used to store the desired information and which can be accessed by the computer 110. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above are included within the scope of computer-readable media.

The system memory 130 includes computer storage media in the form of volatile and/or nonvolatile memory such as read only memory (ROM) 131 and random access memory (RAM) 132. By way of example, and not limitation, Figure 1 illustrates operating system 134, application programs 135, other program modules 136 and program data 137.

The computer 110 may also include other removable and non-removable, volatile and nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CDROM. Other computer storage media that can be used in the exemplary operating environment include, but are not limited to, magnetic tape cassettes, flash memory cards, DVDs, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The computer system may include interfaces for additional types of removable nonvolatile storage devices. For instance, the computer may have a USB port 153 that can accept a USB flash drive (UFD) 154, or a SD card slot 157 that can accept a Secure Digital (SD) memory card 158. A USB flash drive is a flash memory device that is fitted with a USB connector that can be inserted into a USB port on various computing devices. A SD memory card is a stamp-sized flash memory device. Both the USB flash drive and SD card offer high storage capacity in a small package and high data transfer rates. Other types of removable storage media may also be used for implementing the invention.

The drives and their associated computer storage media, discussed above and illustrated in Figure 1, provide storage of computer-readable instructions, data structures, program modules and other data for the computer 110. In Figure 1, for example, hard disk drive 141 is illustrated as storing an operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 110 through input devices such as a tablet, or electronic digitizer, 164, a microphone 163, a keyboard 162 and pointing device 161, commonly referred to as a mouse, trackball or touch pad. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 by way of an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 197 and printer 196, which may be connected through an output peripheral interface 194 or the like.

The computer 110 preferably operates or is adaptable to operate in a networked environment using logical connections to one or more remote computers, such as a remote computer 180. The remote computer 180 may be a personal computer, a server, a router, a peer device or other network node, and typically includes some or all of the elements described above relative to the computer 110, although only a memory storage device 181 has been illustrated in FIG. 1. The logical connections depicted in FIG. 1 include a LAN 171 and a WAN 173, but may also include other networks. For example, in the present invention, the computer 110 may comprise the source machine from which data is being migrated, and the remote computer 180 may comprise the destination machine. Note however that source and destination machines need not be initially connected by a network or otherwise, but instead, data may be migrated by way of any media capable of being written by the source platform and read by the destination platform or platforms. For example, one non-limiting instance of such a medium is a portable flash memory medium.

When used in a LAN environment, the computer 110 is connectable to the LAN 171 through a network interface or adapter 170. The computer 110 may also include a modem 172 or other means for establishing communications over the WAN 173. The modem 172, which may be internal or external, may be connected to the system bus 121 by way of the user input interface 160 or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

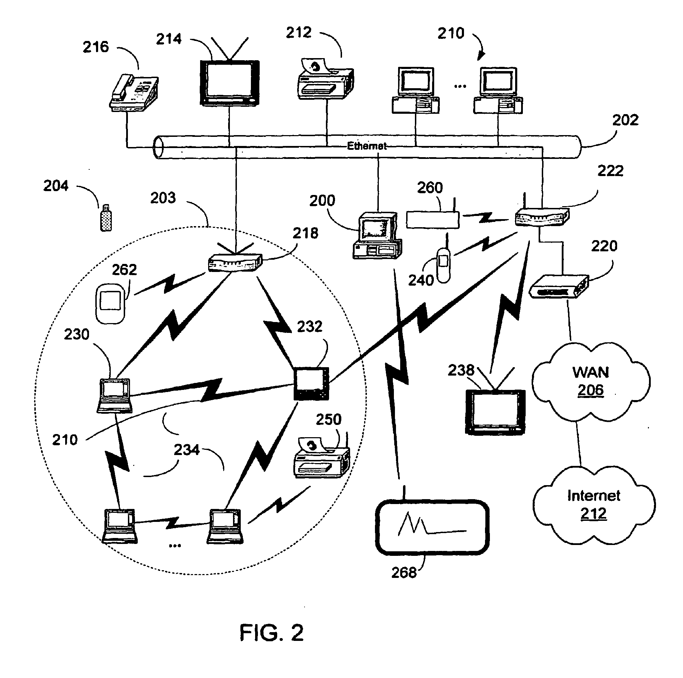

Turning to FIG. 2, the present invention is directed to a simple and convenient way for a user to set up thin client computing devices in a home network or the like. The term "thin client" commonly refers to a computing device that is quipped with a microprocessor but runs a simplified or reduced operation system (e.g., Windows CE of Microsoft Corporation or an "embedded" version of an operating system) and does not have or support conventional user interface I/O devices such as a monitor and a keyboard. As a result, thin client devices typically have very limited input means, such as buttons with predefined functions that a user can use to enter commands. Some of them may not even have any user-operable input means. They also typically have very limited signaling means, such as LED's as indicator lights, or a liquid crystal display (LCD) screen for displaying simple signals and messages. Due to the limited user interface I/O capabilities, it can be a very complex and laborious task to configure a thin client device. Conventionally, the task of configuring a thin client device is made easier by connecting the thin client device to a personal computer, and running a proprietary configuration program on the personal computer that interacts with the thin client device to change settings on the device. This approach becomes impractical for many new thin client devices for use in a network environment that rely on wireless transmissions for network communications. The present invention allows such thin client devices to be configured easily with desired network settings and other operation parameters with minimal user intervention.

By way of example, FIG. 2 shows an exemplary network environment that has various thin client devices. A user's personal computer (PC) 200 is connected to an Ethernet-based local area network (LAN) 202. Other devices connected to the Ethernet include, for example, other PC's 210, a printer 212, a networkable television 214, a networkable telephone 216. The LAN may include a wireless access point 218 for forming an infrastructure wireless network. The LAN may further include a residential gateway device 222 that is connected to an external wide area network (WAN) through, for instance, a broad-band modem 220 for accessing the Internet 212. The residential gateway device 222 may also have wireless transmission capabilities to enable it to function as a wireless access point to communicate with wireless computing devices.

The network environment may also include wireless networks. In an infrastructure wireless network 203, wireless computing devices communicate with each other through the wireless access point 218. An ad hoc wireless network 234 may also be formed among computing devices that communicate wirelessly in a peer-to-peer fashion without going through an access point. The wireless devices may include notebook computers 230, a tablet computing device 232, and various other types of wireless devices such as a wireless television 238, a cellular phone 240, a wireless printer 250, a media center extender 260, a pocket PC 262, a wireless picture frame 268, wireless speakers 270, a wireless media player 272, etc. Other types of existing and new wireless devices can be added to the wireless networks. Wireless devices may communicate utilizing any suitable wireless communication protocol. Examples of suitable wireless communication protocols include wireless communication protocols in accordance with the Institute of Electrical and Electronics Engineers (IEEE) 802.1 x series of standards, the Bluetooth® group of standards and the Ultra-Wideband (UWB) group of standards. As can be seen, many of the devices in the wired and wireless networks are thin client devices and can be difficult or cumbersome to configure for networking and other functions in the conventional way.

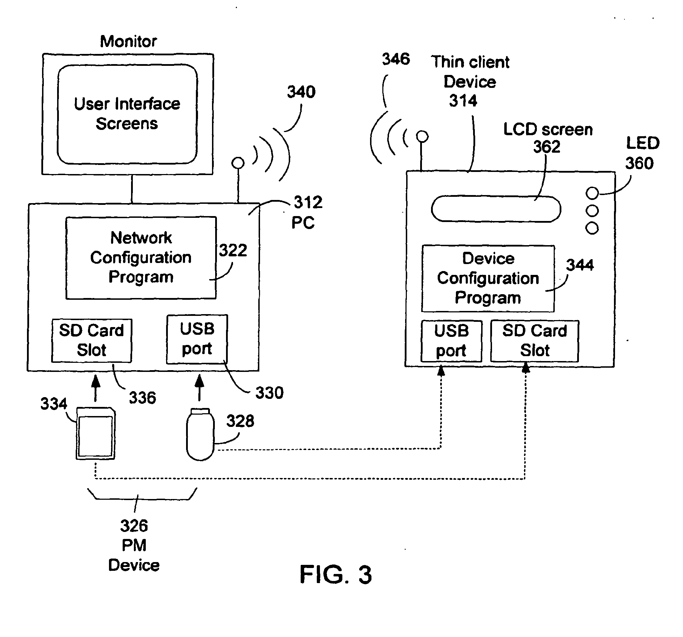

In accordance with a feature of the invention, the process of configuring a thin client device is made very simple and easy by using a portable media device to transfer configuration data and initiate automatic configuration of the device. Referring to FIG. 3, a configuration program 322 on a computer 312 assists a user in generating the configuration data for the thin client device 314. Once the configuration data are generated, they are stored on a portable media (PM) device 326 connected to the computer 312. The portable media device 326 may be, for example, a USB flash drive 328 that may be inserted into a USB port 330, or a SD memory card 334 that may be inserted into a SD card slot 336. It will be appreciated that the invention is not limited to these two portable memory media, and other types of portable media may be used for implementing the invention.

The configuration data generated by the configuration program 322 may include network settings for the thin client device to communicate other computing devices on the network. Depending on its network location and functions, the thin client device 314 may require network settings for a wireless network (infrastructure or ad hoc), a LAN, or a WAN, and sometimes all of them. For example, the residential gateway 222 in FIG. 2 may require wireless network settings when it functions as an access point, LAN settings for communications over the Ethernet, and WAN settings for communicating with the WAN 206 through the broad band modem, which may require its own special settings. In addition to network settings, the configuration data may include other parameters pertaining to the operations of the device, such as device-specific configuration information, security information, and file sharing information.

After the configuration data are stored on the portable media device 326, the portable media device is disconnected from the first computer 312 and used to transfer the configuration data to one or more thin client devices. In a preferred embodiment, to set up a thin client device, all the user has to do is to connect the portable media device 326 to that device. The thin client device 314 detects the connection of the portable media device, and may run a configuration program 344 to load the configuration settings from the portable media device 326 and automatically configure the thin client device using the received configuration data.

To further simply the task of setting up a thin client device, the configuration program on the computer 312 provides a user interface to help a user to go through the steps of the process of defining the network settings and other configuration data for the thin client device. For simplicity of illustration, the following description will describe an example in which the portable media device is a USB flash drive, and the task is to configure a thin client device for joining an ad hoc wireless network.

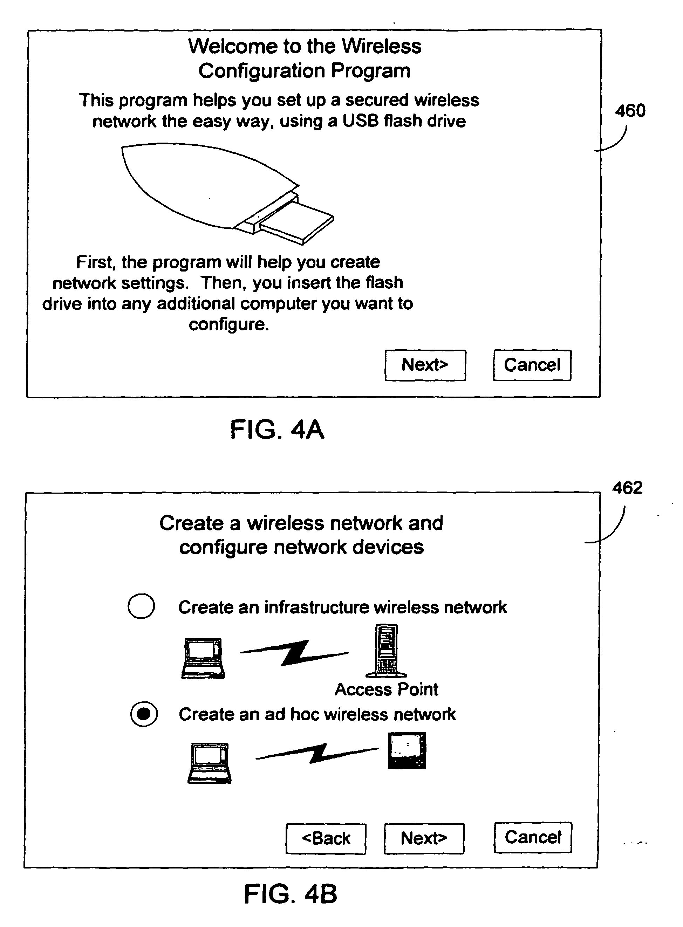

Exemplary user interface screens are shown in FIGS. 4A-4F. For illustration purposes, the portable media device used in the example illustrated by these UI screens is a USB flash drive. In the user interface screen 460 illustrated in FIG. 4A, the user is informed that the configuration program will help the user create the settings for the wireless network, and then the settings will be saved on the USB flash drive and used to configure other computers or thin client devices that are to join the wireless network. In the second UI screen 462 shown in FIG. 4B, the user are given the options of setting up an infrastructure wireless network and setting up an ad hoc wireless network, and the user selects to set up an ad hoc network.

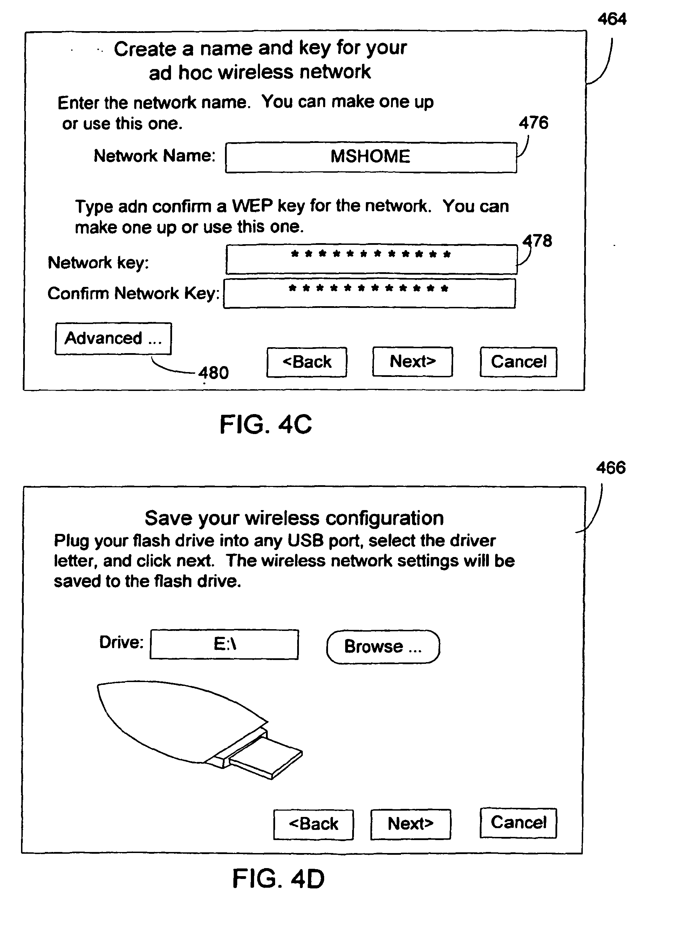

In the UI screen 464 shown in FIG. 4C, the user is presented with a field 476 for selecting a name for the wireless ad hoc network, and a field 478 for selecting a network key. In one implementation, to minimize the work the user has to do, the configuration program may generate the network name and security key for the user, and the user may reject them and enter her own network name and key if she so desires. To that end, the name and key fields are initially filled by the wireless configuration program with values comprising either arbitrary data or data that is chosen using identifiers stored on the computer. For example, if the computer operating system has been registered to "John Smith", then the wireless configuration program can generate "JohnSmithsNetwork" as the default network name. The wireless configuration program may call a function of the operating system to generate a security key for the wireless network. The user can accept the network name and key suggested by the configuration program by clicking "Next", or can edit the fields manually. Additionally, by clicking an "Advanced" button 480, the user is permitted to edit a variety of other network configuration settings, which otherwise are automatically generated by the wireless configuration program. An advantage of providing a key generated by the computer is that the key may be a full-sized key containing randomized characters, for example, alphanumeric characters. Such a key may provide enhanced security as compared to a user-entered key, which tends to be short and contain patterns that are easy for the user to memorize. Since the network settings, including the security key, are to be transferred to other computers by means of the portable media device, the user does not have to try to create a key that she can remember and is more likely to use the key generated by the computer.

In the UI screen 466 shown in FIG. 4D, the wireless configuration program prompts the user to insert and identify a USB flash drive. When the user clicks "Next" on this screen to indicate that the USB flash drive has been inserted, the wireless configuration program stores the generated network settings for the wireless ad hoc network to the USB flash drive.

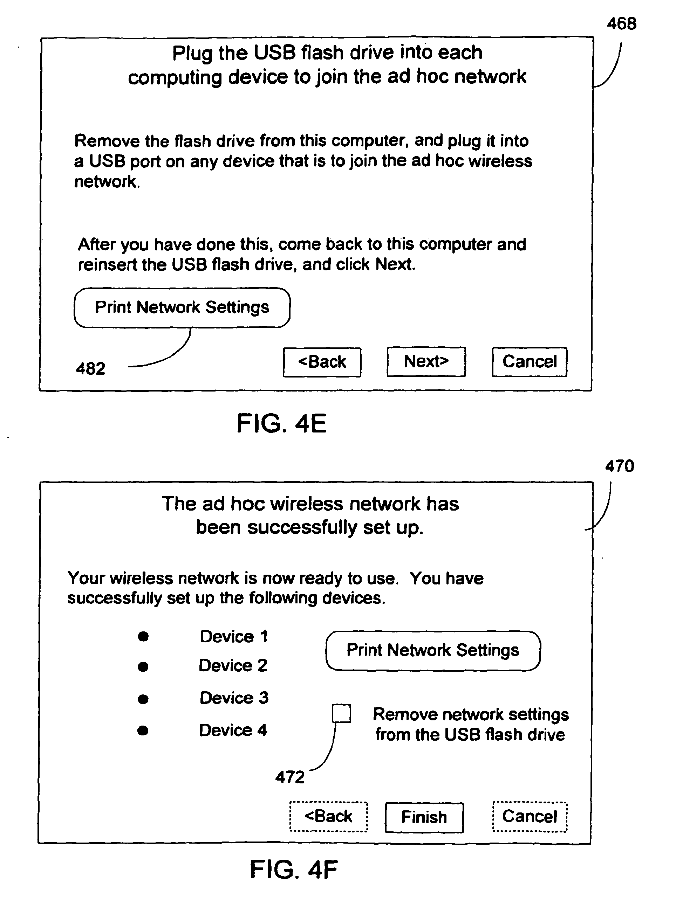

When the network settings have been completely stored on the USB flash drive, the user is presented with another UI screen 468 shown in FIG. 4E, prompting the user to remove the portable media device and plug it into all additional computing devices that are to join the ad hoc network. The UI screen 468 also presents the user with a "Print" button 482, allowing the user to print a hard copy of the network settings, which allows the user to manually configure those network devices that do not accept the portable media device or that cannot be automatically configured for the network.

When the user uses the USB flash drive to set up another computing device for the wireless network, the settings established on that device are written back onto the USB flash drive. After the user has used the USB flash drive to set up other computing devices for the ad hoc wireless network, she returns to the first computer 212 and inserts the USB flash drive in a USB port of the computer. The configuration program reads the setting data written by the other devices and presents a UI screen 470 as shown in FIG. 4F. The UI screen 470 identifies the devices that have been successfully set up for the wireless network. In addition, the configuration program presents the option of removing the settings from the USB flash drive. In the UI screen 470 of FIG. 4F, this option is presented as a check box 472. This prevents the network settings being inadvertently revealed to others when the USB flash drive is later used to transfer data to other computers. Since some users may have the tendency to use the same network name or key, this option of removing the network settings is provided to provide enhanced security. Additional enhanced security measures may be incorporated into configuration processes such as the processes corresponding to FIGS. 4A-4F. For example, utilizing conventional cryptographic techniques, some or all of the settings stored on the portable media device may be encrypted and then require suitable authentication information before being decrypted and/or allow decryption a particular number of times or within a particular date range. Examples of suitable authentication information include a personal identification number (PIN), a password, a pass-phrase and suitable biometrics such as a thumbprint.

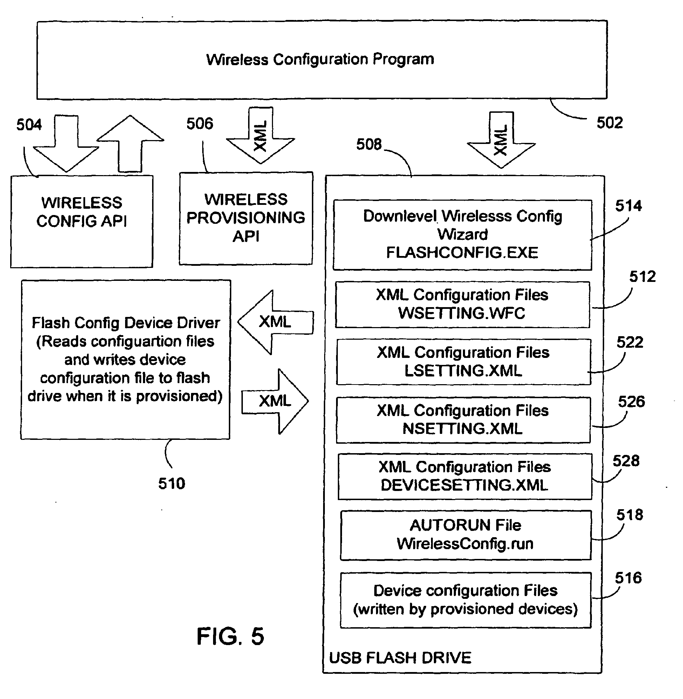

Turning now to FIG. 5, a software architecture used in an embodiment of the invention for generating network settings and other configuration data is now described. A configuration program 502 is executed on a computer and communicates with the computer through a wireless configuration application programming interface (API) 504 to generate network configuration settings. In the Windows operating system environment of Microsoft Corporation, for example, the WZCDLG.DLL library can be used for generating wireless settings.

In accordance with a feature of the embodiment, the network settings and other configuration data for the wireless ad hoc network are stored in the format of an Extensible Markup Language (XML) file. The use of an XML file presents a standard format that can be recognized by many different devices. The configuration program 502 outputs the XML files to the computer through a provisioning API 506. The configuration program 502 further outputs XML files for writing into an attached portable media device, such as a USB flash drive 508. To that end, a flash configuration device driver 510 reads configuration files and writes a device configuration file to the USB flash drive when it is provisioned.

The configuration program 502 stores several files on the USB flash drive 508 for use in the network configuration process. In the embodiment illustrated in FIG. 5, the files include the XML files representing the generated network configuration settings. In one implementation, the XML file containing the wireless network settings are give a special extension name such as "wfc" as shown in FIG. 5, to indicate that the file contains wireless configuration settings. Thus, when the USB flash drive is plugged into another computing device, the operating system of that device will recognize the files 512 as containing wireless network setup information and will invoke the wireless configuration program on that device to handle the files. The USB flash drive 508 may store several XML files representing the generated network configuration settings. A WSETTING.XML file 512 contains settings for a wireless network. An LSETTING.XML file 522 contains settings for a LAN. An NSETTTNG.XML file 528 contains settings for a WAN. These XML files are described in greater detail below. By storing network configuration settings for LAN, WAN and wireless networks, a single USB flash drive 508 can be used to configure a variety of devices (such as personal computers, routers, printers, PDAs, and WAPs) to communicate over a variety of types of networks. The USB flash drive may also be used to store device-specific configuration data, which preferably are in an XML file. In FIG. 5, the XML file containing device-specific configuration data is the DEVICE SETTING.WFC file 528.

In addition, a network setup application 514 (called "Downlevel Flash Config Wizard" in FIG. 5) may be stored on the USB flash drive 508 in order to facilitate the configuring of network settings for other devices. When the USB flash drive 508 is attached to another device, that device can run the network setup application to load the relevant network settings from the USB flash drive 508 to the other device.

As also shown in FIG. 5, the USB flash drive 508 may be used to store device configuration log files 516 that are written into the flash drive by devices that are provisioned for the wireless network using the flash drive. In one implementation, each device configuration log file is identified by a file name that contains the last 8 bytes of the MAC address of the provisioned device in ASCII-HEX format. This file name allows the computer on which the network settings are created to identify the provisioned device.

In an embodiment of the invention, the USB flash drive 508 further stores an autorun file, such as WirelessConfig.run 518. When the USB flash drive 508 is attached to a compatible device that recognizes the autorun file, the detection of wireless.cfg 518 automatically triggers the device to execute the network setup program 514. In this way, no user intervention is required to transfer the network settings to the device after the USB flash drive 508 has been attached.

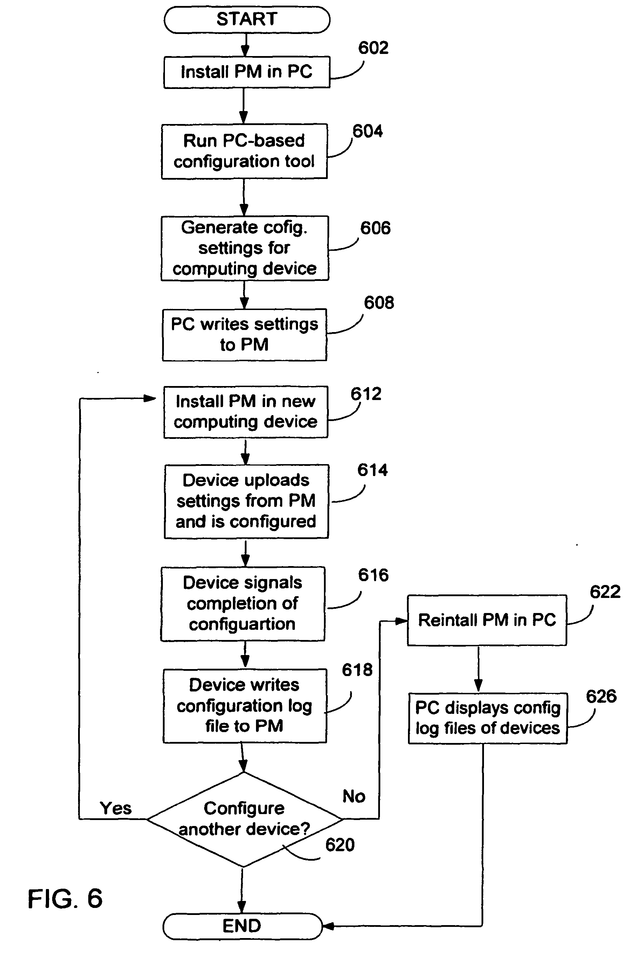

A method of using a portable media device to configure a thin client device in accordance with an embodiment of the invention is now described with reference to FIG. 6. This method is used with, for example, thin client or "headless" devices such as wireless printers, digital audio receivers and smart displays. The described method simplifies the configuration process for such devices in comparison to previous methods. The method begins at step 602 with the attaching of a portable media (PM) device, such as a USB flash drive, to a personal computer that is used to create the settings for the thin client device. The user then runs a PC-based configuration tool on the personal computer at step 604. Through an interactive process with the aid of user interface screens, the configuration tool helps the user create the configuration settings for the intended thin client device at step 606. The configuration settings are then written into the portable media device as one or more XML files at step 608. The portable media device is then removed from the personal computer and installed into the new computing device to be configured at step 612. The computing device uploads the relevant network configuration settings from the PM and is provisioned at step 614. If the computing device supports an automatic discovery protocol, such as UPnP, a computer on the network will immediately recognize the new device and be notified of its availability. In one embodiment, the uploading is performed automatically, without any user intervention. The computing device searches the XML files stored on the portable media device for particular data fields it requires, and uploads the corresponding data from the portable media device. In this way, the device only reads data relevant to its operation. The device then executes a configuration program to automatically configure itself using the received configuration setting data.

Once the configuration settings are implemented on the device, the device preferably signals to the user that it has been successfully configured. How the device signals the completion of configuration would depends on the signaling means the device has. Most thin client devices have one or more light-emitting diodes (LED's), which may be advantageously used for this purpose. For instance, the thin client device may flash an LED three times with a 1-second on/off cycle. Alternatively, if the thin client device has an LCD screen, a simple message may be displayed thereon to indicate to the user that configuration is completed. As another example, a wireless picture frame 268 (FIG. 2) is a device that receives data for a digital picture wirelessly from a source (e.g., a PC) and has a display area for displaying the digital picture. When it is configured using the portable media device, it can use the display area to display the configuration completion message.

In one embodiment, the thin client device that has been configured writes a configuration log file back into the portable media device at step 618. This configuration log file allows the user to ascertain that the device has the proper configuration settings and can be used for diagnostic purposes. The method continues at step 620 with the user determining whether an additional computing device is to be configured using the date on the portable media device. If so, the portable media device is attached to the new computing device at step 612. Any number of new computing devices can be added to the network in this manner. If there is no further computing device to be configured, the user returns to the personal computer and installs the portable media device in the computer. The computer then displays (see FIG. 4F) the configuration data from the configuration log files of the computing devices that have been configured using the portable media device.

In one embodiment, the portable media device includes a time-to-live (TTL) field, and devices configured using the portable media device are denied access to the network after the prescribed TTL has passed. In this way a device is granted only temporary access to the network. In another embodiment, the TTL field is used in conjunction with an authentication scheme, such as a thumbprint. In this way, authenticated devices are granted permanent access to the network while guests are granted only temporary access as determined by the TTL field.

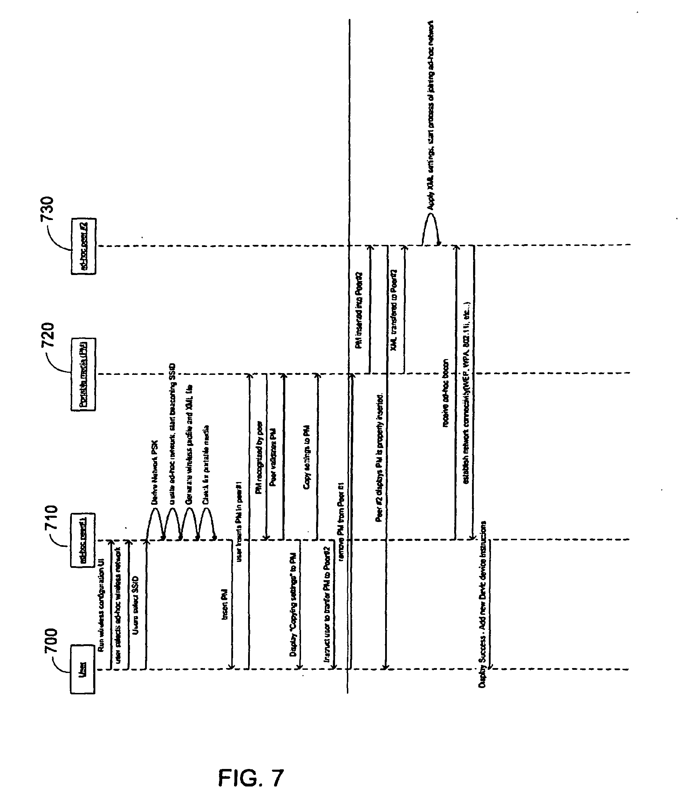

FIG. 7 presents an exemplary sequence of actions illustrating the generating and transferring of network configuration settings, by way of a portable media device, in order to create an ad hoc wireless network. As illustrated in FIG. 7, a user 700 interacts with an initiating computer 710 to create the network settings. The network settings preferably include a Name string used to identify the network, such as an SSID string used during the 802.11 beaconing process, and a Pre-Shared Key string used for network authentication. Authentication types could include, for example, WEP, WPA PSK, or 802.11 i PSK encryption. The key format could be a binary or hexadecimal number, an alphanumeric string, or a keyword. The settings are stored on a portable media device 720 as files in the XML format. The portable media device 720 is then used to configure another peer device 730 of the wireless ad hoc network.

In one embodiment, previously uploaded configuration settings are stored as multiple profiles. By using profiles, users can easily revert to previous network settings and switch to other networks without needing to obtain the network configuration settings again.

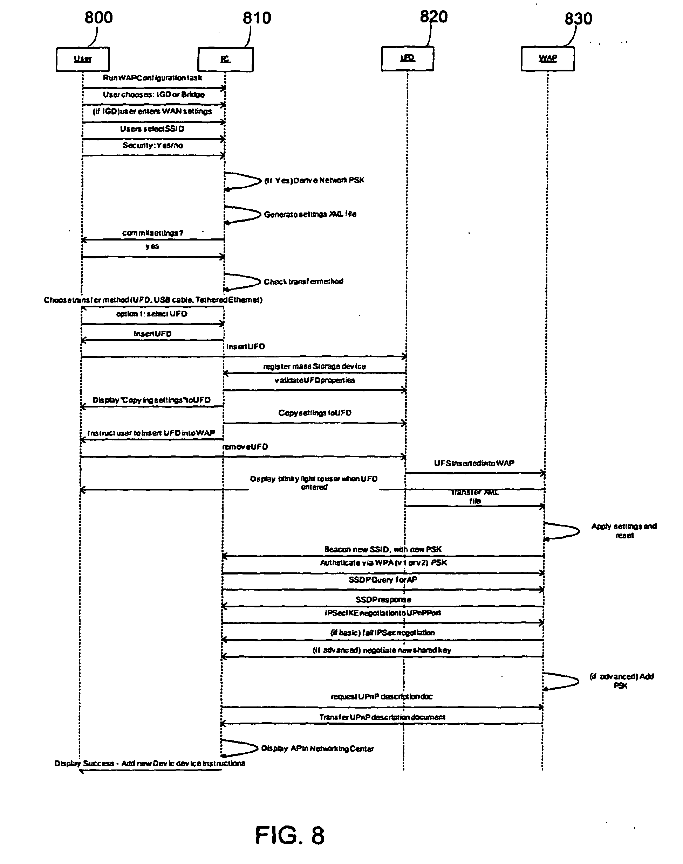

FIG. 8 presents an exemplary sequence of actions illustrating the generating and transferring of network configuration settings, by way of a portable media device, in order to configure a wireless access point (WAP) used to provide 802.11 wireless network connectivity. In FIG. 8, the user 800 runs a network setup wizard on a personal computer 810 to enter the necessary settings to generate the XML file stored on the portable media device 820. The personal computer 810 generates the XML file and instructs the user regarding the use of the portable media device to transfer network settings to a new device, in this case the wireless access point 830. As illustrated, the portable media device 820 is a USB flash drive (UFD), but it could be representative of any media or transfer mechanism for moving XML-format network configuration settings between a PC and a device such as the wireless access point.

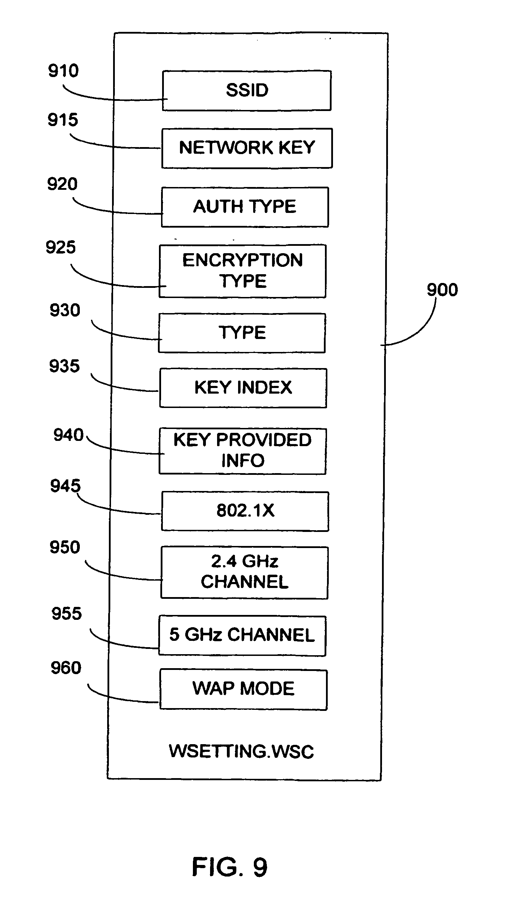

In the process of creating network settings for configuring computing devices, the personal computer generates the WSETTTNGS.XML, LSETTINGS.XML, and NSETTINGS.XML files according to corresponding XML schemas. FIG. 9 illustrates a conceptualization of a schema 900 corresponding to the XML file used in an embodiment for storing the ad hoc wireless network settings on the portable media device. Each element of schema 900 represents a wireless configuration setting. Service set identifier (SSID) 910 is a 1-32 byte string representing the name of the wireless network. SSID 910 can only occur once. Network Key 915 is a string that the PC will automatically generate, or alternatively, receive from the PC user. The Network Key 915 is used for encryption on the wireless network. Authentication Type 920 indicates the authentication protocol used by the wireless network. Authentication Type 920 allows a range of possible values, including open, shared, WiFi Protected Access (WPA), WPA Pre-Shared Key (PSK), WPA-none, WPA2, or WPA2 PSK. Encryption Type 925 indicates the encryption protocol used by the wireless network. Encryption Type 925 allows a range of possible values, including none, Wireless Encryption Protocol (WEP), Temporal Key Integrity Protocol (TKIP), and Advanced Encryption Standard (AES).

Type 930 indicates a connection type, and may have as its value either extended service set (ESS) in the case of an ad hoc network, or infrastructure basic service set (IBSS) in the case of an infrastructure network. Key Index 935 indicates the location of the specific key used to encrypt messages, and may have a value of 1, 2, 3, or 4. Key Index 935 is used with WEP. Key Provided Info 940 indicates whether a key is provided automatically, and can have a value of either 0 or 1. The "802.1X" field 945 indicates whether IEEE 802.1X protocol is used on the network, and can have a value of either 0 or 1. 2.4 GHz Channel 950 indicates which 2.4 GHz Channel, if any, is being used by the wireless network, and can have a value in the range of 1 to 14. 5 GHz Channel 955 indicates which 5 GHz channel, if any, is being used by the wireless network, and can have a value of 36, 40, 44, 48, 52, 56, 60, 64, 149, 153, 157, or 161. WAP Mode 960 indicates the mode in which the wireless access point is operating. WAP Mode 960 can have a value of infrastructure, bridge, repeater, or station.

An exemplary XML schema for wireless network settings is as follows:

```
 <?xml version="1.0" encoding="utf-8" ?>
 <xs:schema xmlns:xs="http://www.w3.org/2001/XMLSchema"
 targetNamespace="http://www.microsoft.com/provisioning/WirelessProfile/2004"
 xml1ns="http://www.microsoft.com/provisioning/WirelessProfile/2004"
   elementFormDefault="qualified"
   version="1">
 <xs:element name="wirelessProfil">
  <xs:complexType>
   <xs:sequence>
    <xs:element name="config">
     <xs:complexType>
      <xs:sequence>
       <xs:element name="configId" minOccurs="1" maxOccurs="1">
         <xs:simpleType>
           <xs:restriction base="xs:string">
             <xs:length value="36" />
           </xs:restriction>
         </xs:simpleType>
       </xs:element>
       <xs:element name="configHash" minOccurs="0" maxOccurs="1">
         <xs:simpleType>
           <xs:restriction base="xs:hexBinary">
             <xs:length value="40" />
           </xs:restriction>
         </xs:simpleType>
       </xs:element>
       <xs:element name = "configAuthorId" minOccurs ="1" maxOccurs ="1">
         <xs:simpleType>
          <xs:restriction base''xs:string">
           <xs:length value=''36" />
            </xs:restriction>
          </xs:simpleType>
        </xs:element>
        <xs:element name="configAuthor" minOccurs="1" maxOccurs="1">
          <xs:simpleType>
            <xs:restriction base="xs:string">
              <xs:maxLength value="128" />
            </xs:restriction>
          </xs:simpleType>
        </xs:element>
      </xs:sequence>
    </xs:complexType>
  </xs:element>
  <xs:element name="ssid" minOccurs="1" maxOccurs-"1">
    <xs:simpleType>
      <xs:restriction base="xs:string">
        <xs:maxLength value="32" />
      </xs:restriction>
    </xs:simpleType>
  </xs:element>
  <xs:element name "ConnectionType" minOccurs="1" maxOccurs="1">
    <xs:simpleType>
      <xs:restriction base="xs:string">
        <xs:enumeration value=''IBSS" />
        <xs:enumeration value="ESS" />
      </xs:restriction>
    </xs:simpleType>
  </xs:element>
  <xs:element name="channe12Dot4" type="xs: integer" minOccurs="0" maxOccurs="1" />
  <xs:element name="channel5Dot0" type="xs: integer" minOccurs="0" maxOccurs="1" />
  <xs:element name="deviceMode" minOccurs="0" maxOccurs-"1">
    <xs:simpleType>
      <xs:restriction base-"xs:string->
        <xs:enumeration value= "infrastructure" />
        <xs:enumeration value="bridge" />
        <xs:enumeration value="repeater" />
        <xs:enumeration value="station" />
      </xs:restriction>
    </xs:simpleType>
  </xs:element>
  <xs:element name="primaryProfile" type="profileInstance" minOccurs="1" maxOccurs-"1" />
  <xs:element name="optionalProfile" type="profileInstance" minOccurs="0"
     maxOccurs="unbounded" />
 </xs:sequence>
 </xs:complexType>
 </xs:element>
 <xs:complexType name="profileInstance">
 <xs:sequence>
 <xs:element name="authentication" minOccurs="1" maxOccurs="1">
  <xs:simpleType>
    <xs:restriction base="xs:string">
      <xs:enumeration value="open" />
      <xs:enumeration value="shared" />
      <xs:enumeration value="WPA-NONE" />

      <xs:enumeration value="WPA" />
      <xs:enumeration value="WPAPSK" />
      <xs:enumeration value="WPA2" />
      <xs:enumeration value="WPA2PSK" />
    </xs:restriction>
  </xs:simpleType>
 </xs:element>
 <xs:element name="encryption" minOccurs="1" maxOccurs="1">
  <xs:simpleType>
    <xs:restriction base="xs:string">
      <xs:enumeration value="none" />
      <xs:enumeration value="WEP" />
      <xs:enumeration value="TKIP" />
      <xs:enumeration value="AES" />
    c/xs:restriction>
  </xs:simpleType>
 </xs:element>
 <xs:element name="networkKey" minOccurs="1" maxOccurs="1">
  <xs:simpleType>
    <xs:restriction base="xs:string">
      <xs:maxLength value="64" />

    </xs:restriction>
  </xs:simpleType>
 </xs:element>
 <xs:element name="keyIndex" type="xs:integer" minOccurs="0" maxOccurs="1" />
 <xs:element name="keyProvidedAutomatically" type="xs:boolean" minOccurs="1" maxOccurs="1"
    />
 <xs:element name="ieee802Dot1xEnabled" type="xs:boolean" minOccurs"1" maxOccurs="1" />
 </xs:sequence>
 </xs:complexType>
 </xs:schema>
```

An exemplary instance of a WSETTINGS.XML file is set forth below. This instance was generated, for example, by the PC using the wireless configuration XML schema set forth immediately above.

```
 <?xml version="1.0" ?>
 <WirelessProfile
 xmlns="http://www.microsoft.com/provisioning/WirelessProfile
 ">
    <ssid>HOMENET</ssid>
    <ConnectionType>ESS</ConnectionType>
    <Authentication>WPAPSK</Authentication>
    <Encryption>TKIP</Encryption>
    <NetworkKey>WirelessKey!0</NetworkKey>
    <KeyProvidedAutomatically>0</KeyProvidedAutomatically >
    <IEEE802.1Xenabled>0</IEEE802.1Xenabled>
 </WirelessProfile>
```

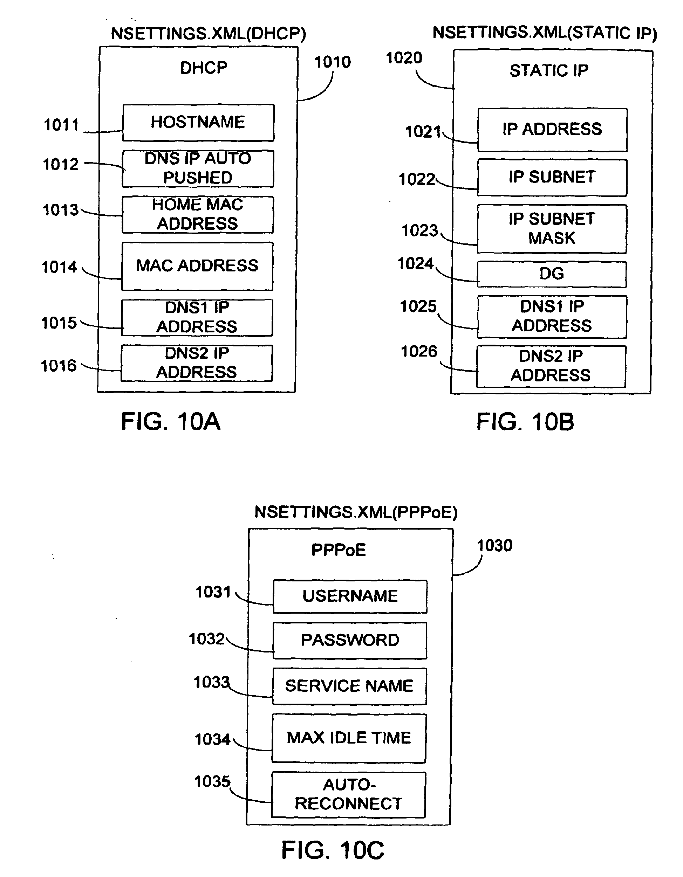

FIGS. 10A-C illustrate a conceptualization of the schemas 1010, 1020, and 1030 corresponding to the NSETTINGS.XML file for WAN configurations. Schema 1010 defines the NSETTINGS.XML file for a Dynamic Host Configuration Protocol (DHCP) WAN. Schema 1020 defines the NSETTINGS.XML file for a WAN using static IP addressing. Schema 1030 defines the NSETTINGS.XML file for a Point-to-Point Protocol over Ethernet (PPPoE) WAN.

Schema 1010 includes the following elements: Hostname 1011, DNS IP Auto Pushed 1012, Clone MAC Address 1013, MAC Address 1014, DNS 1 IP Address 1015, and DNS2 IP Address 1016. Hostname 1011 defines a string signifying the name of the DHCP host. DNS IP Auto Pushed 1012 indicates whether a domain name service IP address is automatically pushed to the DHCP client. Clone MAC Address 1013 indicates whether the Media Access Control (MAC) address of the DHCP client should be cloned for use in the WAN, and takes a value of 0 or 1. MAC Address 1014 defines the MAC address of the DHCP client. DNS1 IP Address 1015 and DNS2 IP Address 1016 define IP addresses for domain name servers.

Schema 1020 includes the following elements: IP Address 1021, IP Subnet 1022, IP Subnet Mask 1023, DG 1024, DNS1 IP Address 1025, and DNS2 IP Address 1026. IP Address 1021 defines the static IP address of the device to be configured. IP Subnet 1022 defines the IP subnet of the device to be configured. IP Subnet Mask 1023 defines the IP subnet mask of the device to be configured. DG 1024 defines the default gateway for the device to be configured. DNS1 IP Address 1025 and DNS2 IP Address 1026 define IP addresses for domain name servers.

Schema 1030 includes the following elements: Username 1031, Password 1032, Service Name 1033, Max Idle Time 1034, and Auto-Reconnect 1035. Username 1031 defines a username for a device to be configured, and Password 1032 defines a password for a device to be configured. Service Name 1032 defines a string indicating the name of a PPPoE server. Max Idle Time 1034 defines a maximum idle time for the device to be configured. Auto-Reconnect 1035 indicates whether the device to be configured should automatically reconnect to the network, and takes a value of 0 or 1.

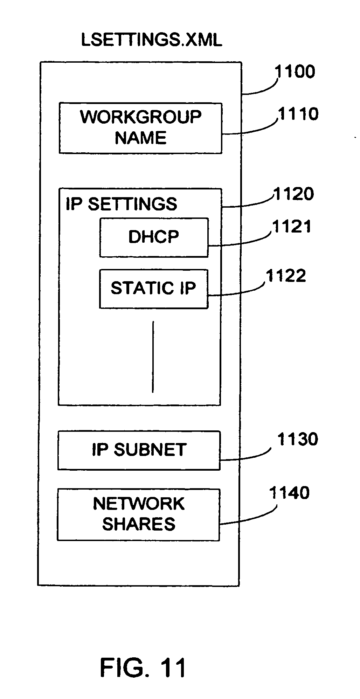

FIG. 11 illustrates a conceptualization of the schema 11 100 corresponding to the LSETTINGS XML file for LAN configuration. Schema 1100 includes the following elements: Workgroup Name 1110, IP Settings 1120, IP Subnet 1130, and Network Shares 1140. Workgroup Name 1110 defines a workgroup name for the LAN. IP Settings 1120 defines the IP settings for the LAN device. The IP Settings 1120 may include subelements DHCP 1121 for defining DHCP settings, Static IP 1122 for defining settings using static IP addressing and IP Subnet 1123 for defining IP subnet settings associated with the Static IP 1122 sub-element. IP Subnet 1130 defines an IP subnet for the device to be configured, wherein the IP subnet defined by IP Subnet 1130 may be different from the IP subnet defines in the IP Subnet 1123 sub-element of the IP Settings 1120, for example, IP Subnet 1130 may define an alternative and/or complementary IP subnet such as a public IP subnet if the IP Subnet 1123 defines a private IP subnet or vice versa. Network Shares 1140 defines the file sharing configuration for the LAN which the device to be configured is to join, including network drive mappings.

It will be appreciated that an improved system and method for configuring thin client computing devices have been disclosed herein. In view of the many possible embodiments to which the principles of the present invention may be applied, it should be recognized that the embodiments described herein with respect to the drawing figures are meant to be illustrative only and should not be taken as limiting the scope of the invention. For example, those of skill in the art will recognize that the illustrated embodiments can be modified in arrangement and detail without departing from the scope of the invention. Although the invention is described in terms of software modules or components, those skilled in the art will recognize that such may be equivalently replaced by hardware components. Therefore, the invention as described herein contemplates all such embodiments as may come within the scope of the following claims.

## Claims

1. A method of configuring a thin client computing device for operation in a network, comprising:
creating (606) configuration data for the thin client computing device, the configuration data including network settings for the thin client computing device to operate in the network;
storing (608) the configuration data on a portable media device;
connecting (612) the portable media device to the thin client computing device; and
detecting, by the thin client computing device, the portable media device connected thereto;
executing (614) by the thin client computing device a configuration program to automatically configure the thin client computing device using the configuration data stored on the portable media device; and **characterized by**
writing (618) by the thin client computing device into the portable media device a configuration log file containing settings of the thin client computing device.

2. A method as in claim 1, wherein the steps of creating (606) and storing (608) configuration data are performed on a computer, and the step of creating includes prompting a user, through a user interface of the computer, to create the network settings for the thin client computing device.

3. A method as in claim 2, wherein the step of creating (606) further includes generating an Extensible Markup Language, XML, file containing the network settings for the thin client computing device, and wherein the step of storing (608) stores the XML file on the portable media device.

4. A method as in claim 2, wherein the step of creating (606) configuration data includes generating, by computer, default values for selected network settings.

5. A method as in claim 4, wherein the step of generating default values includes invoking an application program interface, API, of an operating system of the computer to generate the default values for the selected network settings.

6. A method as in claim 2, wherein the network is a wireless network, and the step of creating (606) network settings includes generating a security key for the wireless network.

7. A method as in claim 2, further including the steps of:
detecting, by the computer, reconnection of the portable media device to the computer; and
retrieving, by the computer from the portable media device, the configuration log file written by the thin client computing device.

8. A method as in claim 2, wherein the step of creating (606) network settings includes receiving network setting data entered by the user.

9. A method as in claim 1, wherein the portable media device is a universal serial bus, USB, flash drive.

10. A method as in claim 1, wherein the portable media device is a flash memory card.

11. A method as in claim 1, further including the steps of signaling (616) by the thin client computing device a completion of configuration operation after the thin client computing device is configured using the configuration data stored on the portable media device.

12. A method as in claim 11, wherein the step of signaling (616) includes flashing a light-emitting diode, LED, on the thin client computing device.

13. A method as in claim 11, wherein the step of signaling (616) includes displaying a message on a liquid crystal display, LCD, screen of the thin client computing device.

14. A computer-readable medium having computer-executable instructions for execution on a thin client computing device for performing steps of:
detecting connection of a portable media device to the thin client computing device,
the portable media device containing configuration data including network settings for the thin client computing device;
automatically configuring the thin client computing device for operation in a network using the network settings contained in the portable media device, and **characterized by**
writing to the portable media device a configuration log file containing settings of the thin client device.

15. A computer-readable medium as in claim 14, wherein the step of automatically configuring includes recognizing that the portable media device contains the network settings, and invoking a configuration program to implement the network settings in the computing device.

16. A computer-readable medium as in claim 14, having further computer-executable instructions for performing the step of writing settings configured on the thin client computing device into the portable media device.

17. A computer-readable medium as in claim 14, having further computer-executable instructions for performing the step of signaling a completion of configuration of the thin client computing device using the configuration data on the portable media device.

18. A computer-readable medium as in claim 14, wherein the portable media device is a universal serial bus, USB, flash drive.

19. A computer-readable medium as in claim 14, wherein the portable media device is a flash memory card.

20. A thin client computing device comprising:
a microprocessor circuit;
a media port for receiving a portable media device; and
a memory containing computer-executable instructions for execution by the microprocessor circuit for detecting connection of a portable media device to the media port, the portable media device containing configuration data including network settings for the thin client computing device; automatically configuring the thin client computing device for operation in a network using the network settings contained in the portable media device, and writing to the portable media device a configuration log file containing settings of the thin client device.

21. A thin client computing device as in claim 20, wherein the memory contains computer-executable instructions for execution by the microprocessor circuit for recognizing that the portable media device contains the network settings, and invoking a configuration program to implement the network settings in the thin client computing device.

22. A thin client computing device as in claim 20, wherein the memory contains computer-executable instructions for execution by the microprocessor circuit for writing settings configured on the thin client computing device into the portable media device.

23. A thin client computing device as in claim 20, wherein the media port is a USB port.

24. A thin client computing device as in claim 20, wherein the media port is a flash card slot.

25. A thin client computing device as in claim 20, further comprising a signaling device, wherein the memory contains computer-executable instructions executable by the microprocessor circuit to operate the signaling device to indicate completion of a configuration operation using the configuration data on the portable media device.

26. A thin client computing device as in claim 25, wherein the signaling device includes a light emitting diode, LED.

27. A thin client computing device as in claim 25, wherein the signaling device includes a liquid crystal display, LCD, screen.

## Patentansprüche

1. Verfahren zum Konfigurieren einer Thin-Client-Computervorrichtung zum Betrieb in einem Netzwerk, das umfasst:
Erzeugen (606) von Konfigurationsdaten für die Thin-Client-Computervorrichtung, wobei die Konfigurationsdaten Netzwerk-Einstellungen für die Thin-Client-Computervorrichtung zum Betrieb in dem Netzwerk enthalten;
Speichern (608) der Konfigurationsdaten auf einer tragbaren Medienvorrichtung;
Verbinden (612) der tragbaren Medienvorrichtung mit der Thin-Client-Computer-vorrichtung; und
Erfassen der damit verbundenen tragbaren Medienvorrichtung durch die Thin-Client-Computervorrichtung;
Ausführen (614) eines Konfigurationsprogramms durch die Thin-Client-Computer-vorrichtung, um die Thin-Client-Computervorrichtung unter Verwendung der auf der tragbaren Medienvorrichtung gespeicherten Konfigurationsdaten automatisch zu konfigurieren; und
**gekennzeichnet durch**
Schreiben (618) einer Konfigurationsprotokolldatei, die Einstellungen der Thin-Client-Computervorrichtung enthält, **durch** die Thin-Client-Computervorrichtung in die tragbare Medienvorrichtung.

2. Verfahren nach Anspruch 1, wobei die Schritte des Erzeugens (606) und Speicherns (608) von Konfigurationsdaten auf einem Computer durchgeführt werden und der Schritt des Erzeugens einschließt, dass ein Benutzer über eine Benutzerschnittstelle des Computers aufgefordert wird, die Netzwerkeinstellungen für die Thin-Client-Computervorrichtung zu erzeugen.

3. Verfahren nach Anspruch 2, wobei der Schritt des Erzeugens (606) des weiteren Erzeugen einer XML (Extensible Markup Language)-Datei einschließt, die die Netzwerkeinstellungen für die Thin-Client-Computervorrichtung enthält, und wobei mit dem Schritt des Speicherns (608) die XML-Datei auf der tragbaren Medienvorrichtung gespeichert wird.

4. Verfahren nach Anspruch 2, wobei der Schritt des Erzeugens (606) von Konfigurationsdaten Generieren von Standardwerten für ausgewählte Netzwerkeinstellungen durch einen Computer einschließt.

5. Verfahren nach Anspruch 4, wobei der Schritt des Generierens von Standardwerten Aufrufen einer Anwendungsprogramm-Schnittstelle eines Betriebssystems des Computers zum Generieren der Standardwerte für die ausgewählten Netzwerkeinstellungen einschließt.

6. Verfahren nach Anspruch 2, wobei das Netzwerk ein Drahtlos-Netzwerk ist und der Schritt des Erzeugens (606) von Netzwerkeinstellungen Generieren eines Sicherheitsschlüssels für das Drahtlos-Netzwerk einschließt.

7. Verfahren nach Anspruch 2, das des weiteren die folgenden Schritte einschließt:
Erfassen erneuter Verbindung der tragbaren Medienvorrichtung mit dem Computer durch den Computer; und
Abrufen der durch die Thin-Client-Computervorrichtung geschriebenen Konfigurations-Protokolldatei durch den Computer von der tragbaren Medienvorrichtung.

8. Verfahren nach Anspruch 2, wobei der Schritt des Erzeugens (606) von Netzwerk-einstellungen Empfangen von durch den Benutzer eingegebenen Netzwerkeinstellungsdaten einschließt.

9. Verfahren nach Anspruch 1, wobei die tragbare Medienvorrichtung ein USB-Flash-Laufwerk ist.

10. Verfahren nach Anspruch 1, wobei die tragbare Medienvorrichtung eine Flash-Speicherkarte ist.

11. Verfahren nach Anspruch 1, das des weiteren die Schritte des Signalisierens (616) eines Abschlusses eines Konfigurationsvorgangs durch die Thin-Client-Computer-vorrichtung einschließt, nachdem die Thin-Client-Computer-vorrichtung unter Verwendung der auf der tragbaren Medienvorrichtung gespeicherten Konfigurationsdaten konfiguriert worden ist.

12. Verfahren nach Anspruch 11, wobei der Schritt des Signalisierens (616) Aufleuchten einer LED (light ermitting diode) an der Thin-Client-Computervorrichtung einschließt.

13. Verfahren nach Anspruch 11, wobei der Schritt des Signalisierens (616) Anzeigen einer Nachricht auf einem LCD (liquid crystal display)-Bildschirm der Thin-Client-Computervorrichtung einschließt.

14. Computerlesbares Medium, das durch Computer ausführbare Befehle zur Ausführung auf einer Thin-Client-Computervorrichtung zum Durchführen der folgenden Schritte aufweist:
Erfassen einer Verbindung einer tragbaren Medienvorrichtung mit der Thin-Client-Computervorrichtung, wobei die tragbare Medienvorrichtung Konfigurationsdaten enthält, die Netzwerkeinstellungen für die Thin-Client-Computervorrichtung einschließen;
automatisches Konfigurieren der Thin-Client-Computervorrichtung zum Betrieb in einem Netzwerk unter Verwendung der in der tragbaren Medienvorrichtung enthaltenen Netzwerkeinstellungen, und
**gekennzeichnet durch**
Schreiben einer Konfigurations-Protokolldatei, die Einstellungen der Thin-Client-Computervorrichtung enthält, auf die tragbare Medienvorrichtung.

15. Computerlesbares Medium nach Anspruch 14, wobei der Schritt des automatischen Konfigurierens einschließt, dass erkannt wird, dass die tragbare Medienvorrichtung die Netzwerkeinstellungen enthält, und ein Konfigurationsprogramm zum Implementieren der Netzwerkeinstellungen in der Computervorrichtung aufgerufen wird.

16. Computerlesbares Medium nach Anspruch 14, das des weiteren durch Computer ausführbare Befehle zum Durchführen des Schrittes des Schreibens von Einstellungen, die auf der Thin-Client-Computervorrichtung konfiguriert sind, auf die tragbare Medienvorrichtung aufweist.

17. Computerlesbares Medium nach Anspruch 14, das des weiteren durch Computer ausführbare Befehle zum Durchführen des Schrittes des Signalisierens eines Abschlusses einer Konfiguration der Thin-Client-Computervorrichtung unter Verwendung der Konfigurationsdaten auf der tragbaren Medienvorrichtung aufweist.

18. Computerlesbares Medium nach Anspruch 14, wobei die tragbare Medienvorrichtung ein USB-Flash-Laufwerk ist.

19. Computerlesbares Medium nach Anspruch 14, wobei die tragbare Medienvorrichtung eine Flash-Speicherkarte ist.

20. Thin-Client-Computervorrichtung, die umfasst:
eine Mikroprozessor-Schaltung;
einen Medien-Port zum Aufnehmen einer tragbaren Medienvorrichtung; und
einen Speicher, der durch Computer ausführbare Befehle zur Ausführung durch die Mikroprozessor-Schaltung zum Erfassen einer Verbindung einer tragbaren Medienvorrichtung mit dem Medien-Port, wobei die tragbare Medienvorrichtung Konfigurationsdaten enthält, die Netzwerkeinstellungen für die Thin-Client-Computervorrichtung einschließen, zum automatischen Konfigurieren der Thin-Client-Computer-vorrichtung zum Betrieb in einem Netzwerk unter Verwendung der in der tragbaren Medienvorrichtung enthaltenen Netzwerkeinstellungen, und zum Schreiben einer Konfigurations-Protokolldatei, die Einstellungen der Thin-Client-Computervorrichtung enthält, auf die tragbare Medienvorrichtung enthält.

21. Thin-Client-Computervorrichtung nach Anspruch 20, wobei der Speicher durch Computer ausführbare Befehle zur Ausführung durch die Mikroprozessor-Schaltung zum Erkennen, dass die tragbare Medienvorrichtung die Netzwerkvorrichtung die Netzwerkeinstellungen enthält, und zum Aufrufen eines Konfigurationsprogramms zum Implementieren der Netzwerkeinstellungen in der Thin-Client-Computervorrichtung enthält.

22. Thin-Client-Computervorrichtung nach Anspruch 20, wobei der Speicher durch Computer ausführbare Befehle zur Ausführung durch die Mikroprozessor-Schaltung zum Schreiben von Einstellungen, die auf der Thin-Client-Computervorrichtung konfiguriert sind, auf die tragbare Medienvorrichtung enthält.

23. Thin-Client-Computervorrichtung nach Anspruch 20, wobei der Medien-Port ein USB-Port ist.

24. Thin-Client-Computervorrichtung nach Anspruch 20, wobei der Medien-Port ein Flash-Card-Schlitz ist.

25. Thin-Client-Computervorrichtung nach Anspruch 20, die des weiteren eine Signalisierungs-Vorrichtung umfasst, wobei der Speicher durch Computer ausführbare Befehle enthält, die durch die Mikroprozessor-Schaltung ausgeführt werden können, um die Signalisierungs-Vorrichtung so zu betreiben, dass sie einen Abschluss eines Konfigurationsvorgangs unter Verwendung der Konfigurationsdaten auf der tragbaren Medienvorrichtung anzeigt.

26. Thin-Client-Computervorrichtung nach Anspruch 25, wobei die Signalisierungs-Vorrichtung eine LED (light emitting diode) enthält.

27. Thin-Client-Computervorrichtung nach Anspruch 25, wobei die Signalisierungs-Vorrichtung einen LCD (liquid crystal display)-Bildschirm enthält.

## Revendications

1. Procédé de configuration d'un dispositif informatique client léger à mettre en oeuvre dans un réseau, comprenant les étapes consistant à :
créer (606) des données de configuration pour le dispositif informatique client léger, les données de configuration comprenant des paramétrages de réseau pour le dispositif informatique client léger à mettre en oeuvre dans le réseau ;
stocker (608) les données de configuration sur un dispositif formant support portatif ;
connecter (612) le dispositif formant support portatif au dispositif informatique client léger ; et
détecter, par le dispositif informatique client léger, le dispositif formant support portatif relié à ce dernier ;
exécuter (614) par le dispositif informatique client léger un programme de configuration pour configurer automatiquement le dispositif informatique client léger en utilisant les données de configuration stockées sur le dispositif formant support portatif ; et **caractérisé par** l'étape consistant à :
écrire (618) par le dispositif informatique client léger sur le dispositif formant support portatif un fichier de journal de configuration contenant les paramétrages du dispositif informatique client léger.

2. Procédé selon la revendication 1, dans lequel les étapes de création (606) et de stockage (608) des données de configuration sont effectuées sur un ordinateur, et l'étape de création comprend l'incitation d'un utilisateur, par l'intermédiaire d'une interface utilisateur de l'ordinateur, à créer les paramétrages de réseau pour le dispositif informatique client léger.

3. Procédé selon la revendication 2, dans lequel l'étape de création (606) comprend en outre la production d'un fichier en langage de balisage extensible, XML, contenant les paramétrages de réseau pour le dispositif informatique client léger, et dans lequel l'étape de stockage (608) stocke le fichier XML sur le dispositif formant support portatif.

4. Procédé selon la revendication 2, dans lequel l'étape de création (606) de données de configuration comprend la production, par ordinateur, de valeurs par défaut pour des paramétrages de réseau sélectionnés.

5. Procédé selon la revendication 4, dans lequel l'étape de production de valeurs par défaut comprend l'invocation d'une interface de programme d'application, API, d'un système d'exploitation de l'ordinateur pour produire les valeurs par défaut pour les paramétrages de réseau sélectionnés.

6. Procédé selon la revendication 2, dans lequel le réseau est un réseau sans fil, et l'étape de création (606) de paramétrages de réseau comprend la production d'une clé de sécurité pour le réseau sans fil.

7. Procédé selon la revendication 2, comprenant en outre les étapes consistant à :
détecter, par l'ordinateur, une reconnexion du dispositif formant support portatif à l'ordinateur ; et
retrouver, par l'ordinateur à partir du dispositif formant support portatif, le fichier de journal de configuration écrit par le dispositif informatique client léger.

8. Procédé selon la revendication 2, dans lequel l'étape de création (606) de paramétrages de réseau comprend la réception de données de paramétrage de réseau entrées par l'utilisateur.

9. Procédé selon la revendication 1, dans lequel le dispositif formant support portatif est une clé mémoire flash à bus série universel, USB.

10. Procédé selon la revendication 1, dans lequel le dispositif formant support portatif est une carte mémoire flash.

11. Procédé selon la revendication 1, comprenant en outre les étapes de signalisation (616) par le dispositif informatique client léger de l'achèvement d'une opération de configuration après la configuration du dispositif informatique client léger en utilisant les données de configuration stockées sur le dispositif formant support portatif.

12. Procédé selon la revendication 11, dans lequel l'étape de signalisation (616) comprend le clignotement d'une diode électroluminescente, LED, sur le dispositif informatique client léger.

13. Procédé selon la revendication 11, dans lequel l'étape de signalisation (616) comprend l'affichage d'un message sur un écran d'affichage à cristaux liquides, LCD, du dispositif informatique client léger.

14. Support lisible par ordinateur comportant des instructions exécutables par ordinateur pour exécution sur un dispositif informatique client léger pour effectuer les étapes consistant à :
détecter la connexion d'un dispositif formant support portatif au dispositif informatique client léger, le dispositif formant support portatif contenant des données de configuration incluant des paramétrages de réseau pour le dispositif informatique client léger ;
configurer automatiquement le dispositif informatique client léger pour fonctionner dans un réseau en utilisant les paramétrages de réseau contenus dans le dispositif formant support portatif, et **caractérisé par** l'étape consistant à :
écrire sur le dispositif formant support portatif un fichier de journal de configuration contenant des paramétrages du dispositif client léger.

15. Support lisible par ordinateur selon la revendication 14, dans lequel l'étape de configuration automatique comprend la reconnaissance que le dispositif formant support portatif contient les paramétrages de réseau, et l'invocation d'un programme de configuration pour mettre en oeuvre les paramétrages de réseau dans le dispositif .informatique.

16. Support lisible par ordinateur selon la revendication 14, possédant en outre des instructions exécutables par ordinateur pour effectuer l'étape d'écriture de paramétrages configurés sur le dispositif informatique client léger sur le dispositif formant support portatif.

17. Support lisible par ordinateur selon la revendication 14, possédant en outre des instructions exécutables par ordinateur pour effectuer l'étape de signalisation de l'achèvement d'une configuration du dispositif informatique client léger en utilisant les données de configuration dans le dispositif formant support portatif.

18. Support lisible par ordinateur selon la revendication 14, dans lequel le dispositif formant support portatif est une clé mémoire flash à bus série universel, USB.

19. Support lisible par ordinateur selon la revendication 14, dans lequel le dispositif formant support portatif est une carte mémoire flash.

20. Dispositif informatique client léger comprenant :
un circuit à microprocesseur ;
un port média pour recevoir un dispositif formant support portatif ; et
une mémoire contenant des instructions exécutables par ordinateur pour exécution par le circuit à microprocesseur pour détecter la connexion d'un dispositif formant support portatif au port média, le dispositif formant support portatif contenant des données de configuration comprenant des paramétrages de réseau pour le dispositif informatique client léger ; pour configurer automatiquement le dispositif informatique client léger pour fonctionner dans un réseau en utilisant les paramétrages de réseau contenus dans le dispositif formant support portatif, et pour écrire dans le dispositif formant support portatif un fichier de journal de configuration contenant des paramétrages du dispositif client léger.

21. Dispositif informatique client léger selon la revendication 20, dans lequel la mémoire contient des instructions exécutables par ordinateur pour exécution par le circuit à microprocesseur pour reconnaître que le dispositif formant support portatif contient les paramétrages de réseau, et pour invoquer un programme de configuration pour mettre en oeuvre les paramétrages de réseau dans le dispositif informatique client léger.

22. Dispositif informatique client léger selon la revendication 20, dans lequel la mémoire contient des instructions exécutables par ordinateur pour exécution par le circuit à microprocesseur pour écrire des paramétrages configurés sur le dispositif informatique client léger dans le dispositif formant support portatif.

23. Dispositif informatique client léger selon la revendication 20, dans lequel le port média est un port USB.

24. Dispositif informatique client léger selon la revendication 20, dans lequel le port média est un connecteur de carte mémoire flash.

25. Dispositif informatique client léger selon la revendication 20, comprenant en outre un dispositif de signalisation, dans lequel la mémoire contient des instructions exécutables par ordinateur pouvant être exécutées par le circuit à microprocesseur pour mettre en oeuvre le dispositif de signalisation pour indiquer l'achèvement d'une opération de configuration en utilisant les données de configuration dans le dispositif formant support portatif.

26. Dispositif informatique client léger selon la revendication 25, dans lequel le dispositif de signalisation comprend une diode électroluminescente, LED.

27. Dispositif informatique client léger selon la revendication 25, dans lequel le dispositif de signalisation comprend un écran d'affichage à cristaux liquides, LCD.
